# EUROPEAN PATENT APPLICATION

(11) **EP 1 775 902 A1**
(43) Date of publication of application: **18.04.2007**
(21) Application number: 05022146.4
(22) Date of filing: 11.10.2005
(51) Int. Cl.: H04L 29/06

(54) **S-CSCF assignment and user profile download for unregistered IMS subscribers for originating services**

(71) Applicant: SIEMENS AKTIENGESELLSCHAFT, 80333 München (DE)
(72) Inventor: Shen, Jiadong, Dr., 80687 München (DE)

(57) **Abstract**

The invention concerns a method for assigning a Serving-Call Session Control Function (S-CSCF) to a user of a telecommunication network using an Internet Protocol Multimedia Subsystem (IMS), for which user a Serving-Call Session Control Function (S-CSCF) of the telecommunication network is not yet assigned, wherein an application server (AS) of the telecommunication network sends (1) a request, asking which Serving-Call Session Control Function (S-CSCF) is assigned to the user, to a user register (HSS) storing information (S-CSCF addresses) concerning registered users and Serving-Call Session Control Function (S-CSCF) addresses, wherein when the user register (HSS) detects that it does not find an address of a Serving-Call Session Control Function (S-CSCF) that is assigned to the user, it (HSS) informs (2) the application server (AS) about this, wherein then the application server (AS) sends (3a+3b or 3) a request (dummy request) to an Interrogating Call Session Control Function (I-CSCF), wherein this request causes the Internetprotocol Multimedia Subsystem (IMS) to assign a Serving-Call Session Control Function (S-CSCF) to the user, and an address of the Serving-Call Session Control Function (S-CSCF) assigned for the user is stored in the user register (FISS), wherein the application server (AS) then sends (2) a further request for identification of an address of a Serving-Call Session Control Function (S-CSCF), which Serving-Call Session Control Function (S-CSCF) is assigned to the user, to the user register (HSS), wherein the user register (HSS) then returns (3) to the application server (AS) the address of the Serving-Call Session Control Function (S-CSCF) which was assigned to the user, wherein then the application server (AS) sends a request (SIP) to the Serving-Call Session Control Function (S-CSCF) using the address received from the user register (HSS).

## Description

The invention concerns a method for hosting a user of a telecommunication network.

Known cellular mobile telecommunication networks and Internet Protocol Multimedia Subsystem (IMS) as such are known e.g. (but not limited to that) from 3GPP or GSM specifications that are also available in the internet (www.3gpp.org, www.etsi.org).

3GPP in [TS 23.228, TS24.229] allows that in IP Multimedia Subsystem (IMS) an Application Server (AS) may originate a SIP request on behalf of a user, even if the user is not registered in IMS. Though it is required in [TS 24.229] that an AS shall send the request via ISC interface to the S-CSCF where the user on whose behalf the request is generated is registered or hosted (unregistered case), it could happen that no S-CSCF was assigned to that user. Currently the TS 23.228 requests that such a request shall be processed by the S-CSCF. But it is not specified:
- how a S-CSCF can be assigned to the user
- how the S-CSCF assigned to the user can download the user profile

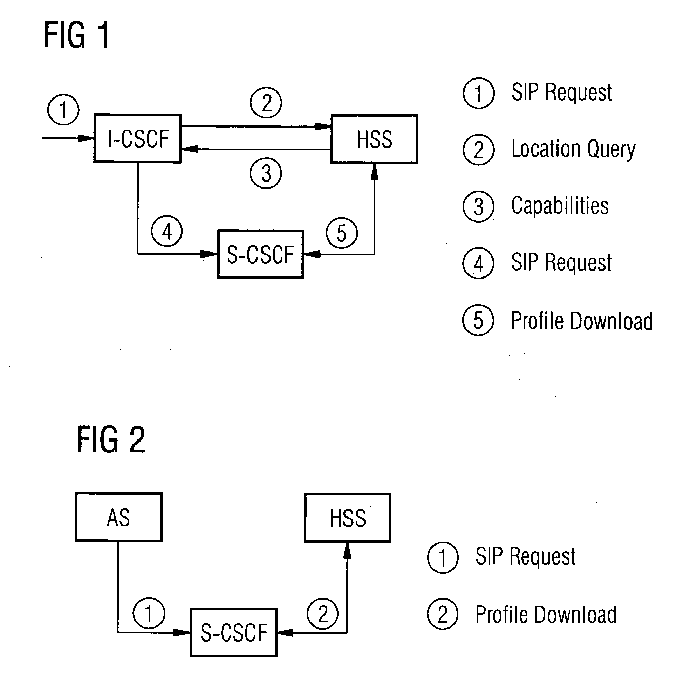

For a registered user there is always an S-CSCF, which is assigned to the user and has his/her profile. Therefore the scenario mentioned above can only happen for an unregistered user. Currently these two aspects listed above are only specified by 3GPP for terminating requests received via Mw interface by the S-CSCF (see Figure 1). In this case, the terminating requests will be sent to an I-CSCF acting as the entry point of the terminating domain (step 1 in Figure 1). The I-CSCF will then query the Home Subscriber Server (HSS) about at which S-CSCF the user is registered or hosted (unregistered case) (step 2 in Figure 1). If no S-CSCF has been assigned to the user, the HSS will provide the capabilities required for the user back to I-CSCF (step 3 in Figure 1). The I-CSCF will then compare the capabilities of the S-CSCFs configured at the I-CSCF with the service capabilities of the user, and then select an S-CSCF for the user accordingly and forward the request to the selected S-CSCF (step 4 in Figure 1). When the selected S-CSCF receives the request from the I-CSCF and determines that the served user is an unknown user for it, it will download the user profile (whole or only unregistered part) from the HSS and act as the so-called default S-CSCF for the unregistered user (step 5 in Figure 1). The HSS will then assign the S-CSCF as default S-CSCF to the user. The S-CSCF selection mechanism by I-CSCF is specified by 3GPP and can deal with dynamic operational aspects, e.g. load balancing, failover.

It has not been specified, however, how to assign an S-CSCF to an unregistered user, if the requests originates from an AS. Therefore even if a user has IMS subscription for originating services in unregistered case, it cannot be guaranteed that such services will be conducted in IMS. Such services will only be conducted when a default S-CSCF has already been assigned to that user.

Currently there are discussions in 3GPP how this problem can be solved. The current proposal (see Figure 2) suggests that the AS may send the request via ISC interface to a pre-configured S-CSCF if no S-CSCF is assigned to the user (step 1 in Figure 2). Then the S-CSCF receiving such a request via ISC interface shall download the user profile from the HSS on Demand and conduct originating services for that user (step 2 in Figure 2).

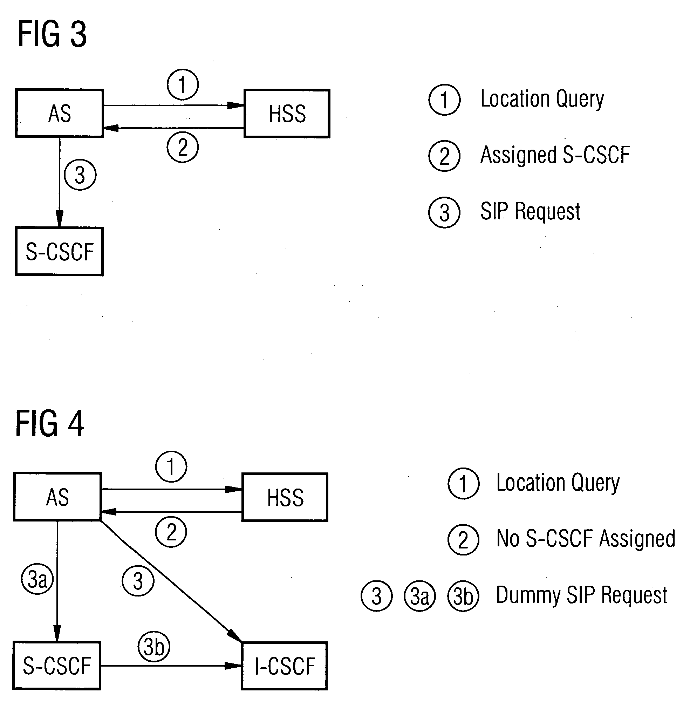

The disadvantage of this proposal is that:
- The assignment of S-CSCF to a user is statically pre-configured. No dynamic aspects like load balancing, failover can be taken into account.
- Different users may have different service capabilities, which may need different S-CSCFs with corresponding capabilities. The static pre-configuration cannot take the capability aspect into account, either. Current Sh interface between the HSS and the AS doesn't allow the HSS to provide an AS with capability information of the user.
- Change at S-CSCF is necessary because the S-CSCF has to be enhanced to download user profile for requests receiving from ISC interface
- Another S-CSCF may have already been assigned to the served user. In this case the HSS will reject the profile download. Therefore the AS shall query the HSS about the S-CSCF address assigned to the user (see Figure 3) before starting the procedure described above (see Figure 2).

It is an object of the invention to improve this. The object is solved by the invention described in patent claim 1. Advantageous preferred embodiments are described in the dependent patent claims.

Further possible details of the invention are described in the explanation of the drawings:
Fig. 1 schematically shows how a S-CSCF can be assigned to an unregistered user by receiving a terminating request.
Fig. 2 schematically shows how a S-CSCF can be assigned to a unregistered use by receiving an originating request on behalf of the unregistered user.
Fig. 3 + Fig. 4 show the flows according to the invention, wherein
   Fig. 3 shows how an AS can get the S-CSCF address assigned to a user (either registered or unregistered).

The invention advantageously can use the existing S-CSCF selection mechanism specified by 3GPP to assign a default S-CSCF to an unregistered user. In the following the procedures are specified:
i. The AS shall try to get the S-CSCF address, which is hosting the served user, from the HSS via Sh interface (step 1 in Figure 3). If an assigned S-CSCF address is returned back from the HSS to the AS (step 2 in Figure 3), the AS will just forward the originating request to the assigned S-CSCF on behalf of the user (step 3 in Figure 3)
ii. If no S-CSCF is assigned to the user (step 2 in Figure 4), the AS shall send a (dummy) SIP request addressing the served user. The AS may send the request to a pre-configured S-CSCF acting as an outbound proxy for the AS, as specified for R5 IMS (step 3a in Figure 4).
   Since the pre-configured S-CSCF doesn't host the user, it will just proxy the request to the I-CSCF, which acts as the entry point of the domain the served user belongs (step 3b in Figure 4). The procedure how the I-CSCF address can be determined is specified in RFC 3263 and shall be supported by any standard compliant SIP entity, including CSCF and AS. Alternatively, the AS may also send the request to the I-CSCF directly (step 3 in Figure 4), but this is not foreseen by 24.229 now. Such a (dummy) request could be e.g. a SIP OPTIONS request which will not cause any problems in IMS, but force the IMS to assign a S-CSCF to the served user using the procedure described under point 1 for terminating service case (see Figure 1).
iii. After receiving a response (either positive or negative one), the AS shall repeat the procedure i) again, i.e. query the HSS again about the S-CSCF address of the served user. Since now a default S-CSCF has been assigned to the user, the AS will get the address of the default S-CSCF of the user. Now the AS can generate any SIP request on behalf of the served user to the default S-CSCF using the address got from the HSS (see Figure 3)

The following advantages are provided by the proposal described under point 3:
- The existing S-CSCF selection mechanism can be re-used for this purpose. No additional functions are required -> reuse of existing implementation
- The capabilities of the served use can be taken into account -> these aspects are not covered by the proposal discussed currently in 3GPP
- Dynamic aspects like load balancing, failover can be taken into account -> these aspects are not covered by the proposal discussed currently in 3GPP
- The S-CSCF doesn't need to be enhanced with the new user profile download procedure for requests received via ISC interface. The existing one for the terminating services can be re-used

Therefore the procedure suggested under point 3 will cause no changes in IMS core with respect to S-CSCF selection and user profile download. The AS has to support the Sh anyway because AS can only get the S-CSCF address assigned to an unregistered user from HSS, since for unregistered user no 3^{rd} party registration is available. And an originating AS is also allowed to originate any SIP request. So the AS just issues an additional SIP request addressing the served user, e.g. SIP OPTIONS request. As the conclusion, the changes necessary at an application server AS for implanting the invention are limited.

## Claims

1. Method for assigning a Serving-Call Session Control Function (S-CSCF) to a user of a telecommunication network using an Internet Protocol Multimedia Subsystem (IMS), for which user a Serving-Call Session Control Function (S-CSCF) of the telecommunication network is not yet assigned,
wherein an application server (AS) of the telecommunication network sends (1. / Fig. 4) a request, asking which Serving-Call Session Control Function (S-CSCF) is assigned to the user, to a user register (HSS) storing information (S-CSCF addresses) concerning registered| or hosted users and Serving-Call Session Control Function (S-CSCF) addresses,
wherein when the user register (HSS) detects that it does not find an address of a Serving-Call Session Control Function (S-CSCF) that is assigned to the user, it (HSS) informs (2. / Fig. 4) the application server (AS) about this,
wherein then the application server (AS) sends (3a+3b or 3. / Fig. 4) a request (dummy request) to an Interrogating Call Session Control Function (I-CSCF), wherein this request causes the Internet Protocol| Multimedia Subsystem (IMS) to assign a Serving-Call Session Control Function (S-CSCF) to the user, and an address of the Serving-Call Session Control Function (S-CSCF) assigned for the user is stored in the user register (HSS),
wherein the application server (AS) then sends (2. / Fig. 3) a further request for identification of an address of a Serving-Call Session Control Function (S-CSCF), which Serving-Call Session Control Function (S-CSCF) is assigned to the user, to the user register (HSS), wherein the user register (HSS) then returns (3. / Fig. 3) to the application server (AS) the address of the Serving-Call Session Control Function (S-CSCF) which was assigned to the user,
wherein then the application server (AS) sends (3./ Fig 3) a further request (SIP) to the Serving-Call Session Control Function (S-CSCF) using the address received from the user register (HSS).

2. Method according to claim 1, **characterized in that** the request sent from the application server (AS) to (3a+3b or 3. / Fig. 4) an Interrogating Call Session Control Function (I-CSCF) is a dummy request.

3. Method according to any of the preceding claims, **characterized in that** the application server (AS) sends (3a. / Fig. 4) a request (dummy request) addressed to the user to a Serving-Call Session Control Function (S-CSCF), which Serving-Call Session Control Function (S-CSCF) sends the request to an Interrogating Call Session Control Function (I-CSCF).

4. Method according to any of the preceding claims, **characterized in that** the application server (AS) sends (3a. / Fig. 4) a request (dummy request) directly to an Interrogating Call Session Control Function (I-CSCF),
especially without sending it via an Serving-Call Session Control Function (S-CSCF) that would send the request to the Interrogating Call Session Control Function (I-CSCF).

5. Method according to any of the preceding claims, **characterized in that** the application server (AS) sends (3./ Fig 3) a Session Initiation Protocol (SIP) request to the Serving-Call Session Control Function (S-CSCF) using the address received from the user register (HSS).

6. Method according to any of the preceding claims, **characterized in that** the Application Server (AS) originates a Session Initiation Protocol (SIP) request on behalf of the user, when the user is not yet registered in the Internet-protocol Multimedia Subsystem (IMS).

7. Method according to any of the preceding claims, **characterized in that** when for the user a Serving-Call Session Control Function (S-CSCF) of the telecommunication network was not yet assigned,
the user moreover was not yet registered in an Internet-protocol Multimedia Subsystem (IMS) of the telecommunication network.

8. Method according to any of the preceding claims, **characterized in that** a profile of the user is downloaded from the register (HSS) to the Serving-Call Session Control Function (S-CSCF) which was assigned to the user.

9. Method according to any of the preceding claims, **characterized in that** the telecommunication network is a cellular mobile telecommunication network.
